# EUROPEAN PATENT APPLICATION

(11) **EP 4 723 418 A1**
(43) Date of publication of application: **08.04.2026**
(21) Application number: 24204667.0
(22) Date of filing: 04.10.2024
(51) Int. Cl.: H02J 3/14, C25B 1/04, C25B 15/02, H02J 4/00, H02J 13/00, H02J 15/00

(54) **CONTROLLING AN ELECTROLYZING PLANT HAVING AT LEAST ONE ELECTROLYZING DEVICE**

(71) Applicant: Siemens Energy Global GmbH & Co. KG, 81739 München (DE)
(72) Inventor: Buratckii, Artem, 90459 Nürnberg (DE); Loku, Fisnik, 90439 Nürnberg (DE); Dros, Arne, 91052 Erlangen (DE)

(57) **Abstract**

The invention relates to a method for controlling an electrolyzing plant (10) having an electrolyzing device (14), wherein the electrolyzing plant is supplied with electric energy from an electric power network (12) via a circuit breaker (16), wherein the switching status is controlled by a status signal (28) of a control station (18), wherein the electrolyzing plant has an electric converter connected with the electrolyzing device and the circuit breaker (16), wherein the converter converts the alternating voltage into a DC electrolyzing voltage and adjusts a converted power dependent on a control signal (22) of the control station, wherein the electrolyzing plant receives a disconnection signal (24) from a control center (26) of the electric power network, wherein the disconnection signal is submitted directly to the electric converter in order to cause the electric converter reducing the converted power of the electric converter independent from the control signal.

## Description

The invention relates to a method for controlling an electrolyzing plant having at least one electrolyzing device, especially configured to electrolyze water by providing an electrolyzing process, wherein the at least one electrolyzing device is configured to perform the electrolyzing process in response to being subjected to an DC electrolyzing voltage, wherein the electrolyzing plant is supplied with electric energy from an electric power network via a circuit breaker of the electrolyzing plant depending on a switching status of the circuit breaker, wherein the switching status is controlled by a status signal of a control station of the electrolyzing plant, wherein the electric power network provides an alternating voltage, wherein the electrolyzing plant has at least one electric converter connected with the at least one electrolyzing device and the circuit breaker, wherein the converter converts the alternating voltage into the DC electrolyzing voltage and adjusts a converted power dependent on a control signal of the control station. Also, the invention relates to a control apparatus for a control station of an electrolyzing plant having at least one electrolyzing device, especially configured to electrolyze water by providing an electrolyzing process, wherein the at least one electrolyzing device is configured to perform the electrolyzing process in response to being subjected to an DC electrolyzing voltage, wherein the electrolyzing plant is configured to be supplied with electric energy from an electric power network via a circuit breaker of the electrolyzing plant depending on a switching status of the circuit breaker, wherein the switching status is controlled by a status signal of a control station of the electrolyzing plant, wherein the electric power network provides an alternating voltage, wherein the electrolyzing plant has at least one electric converter connected with the at least one electrolyzing device and the circuit breaker, wherein the at least one converter is configured to convert the alternating voltage into the DC electrolyzing voltage and to adjust a converted power dependent on a control signal of the control station. Moreover, the invention relates to an electrolyzing plant having at least one electrolyzing device, especially configured to electrolyze water by providing an electrolyzing process, wherein the at least one electrolyzing device is configured to perform the electrolyzing process in response to being subjected to an DC electrolyzing voltage, a circuit breaker configured to be connected with an electric power network providing an alternating voltage, at least one electric converter that is connected with the circuit breaker and the at least one electrolyzing device, wherein the at least one electric converter is configured to convert the alternating voltage of the electric power network into the DC electrolyzing voltage, in order to supply the at least one electrolyzing device with electric power of the electric power network, wherein the at least one electric converter is configured to adjust a converted power dependent on a control signal, and a control station having a control apparatus, wherein the control station is at least configured to provide the control signal for the at least one electric converter. Finally, the invention relates to a computer program product and a computer-readable medium.

Methods for controlling electrolyzing plants, for instance, for producing hydrogen and oxygen by electrolyzing of water by performing an electrolyzing process, control apparatuses for controlling electrolyzing plants, and electrolyzing plants are well-known in the state of the art, which is why specific documents as a reference need not to be cited. The before-mentioned objects relate to providing an electrolyzing process, which is used, for example, for producing hydrogen and oxygen by electrolyzing of water. The following considerations can be also applied to such electrolyzing processes, respectively. Also, respective computer program products and a computer-readable mediums are known to those skilled in the art.

Electrolysis is generally provided by an electrolyzing device of the electrolyzing plant, which, in turn, comprises usually plural electrolyzing cells arranged in the at least one electrolyzing device. A group of the electrolyzing cells of a specific electrolyzing device may be arranged to form an electrolyzing module. One or more electrolyzing modules may form the electrolyzing device. Although the electrolyzing plant may have at least one electrolyzing device, plural electrolyzing devices are possible. The control station of the electrolyzing plant may control operation of the electrolyzing devices at least partially, especially with regard to a consumed power. The control station may operate the electrolyzing devices individually or collectively. The control station may provide a device control signal for each of the electrolyzing devices or it may provide a common device control signal for at least a portion of the electrolyzing devices or all of the electrolyzing devices.

The electrolyzing cells of a specific electrolyzing device or a specific electrolyzing module, respectively, may be electrically connected at least partially in series and/or in parallel. An electric connection of the electrolyzing device may be provided such that at least some, or especially all, of the electrolyzing cells are subjected to a respective portion of a DC voltage or DC electrolyzing voltage, respectively, subjected to the electrolyzing device. The operation of generic electrolyzing cells as well as electrolyzing devices, for instance, for the use for electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

An electrolyzing device has at least one single electrolyzing cell. However, common designs of electrolyzing devices require that a specific electrolyzing device has a plurality of electrolyzing cells. During the electrolyzing process, when the electrolyzing device is subjected to the suited electrolyzing voltage, which is usually a DC voltage, the electrolyzing device responds with an electrolyzing DC current flow. Especially with regard to the electrolyzing of water, during the electrolyzing process, water is consumed, and hydrogen and oxygen are produced. A value of the DC voltage usually may depend on the number of electrolyzing cells being connected in series inside of the electrolyzing device. The electrolyzing DC current flow may depend on the number of electrolyzing cells being connected in parallel as well as a specific design of each of the electrolyzing cells.

Usually, an electrolyzing plant requires a respective high-power supply during the electrolyzing process. The conditions for establishing the electrolyzing process are not easy to control, which is why it is usually an intention of an operator of the electrolyzing plant to maintain specific processing conditions and to avoid large amendments of these conditions. Therefore, controlling of the electric power network should consider these requirements for supplying the electrolyzing plant with electric energy, on the one hand. On the other hand, network requirements of the electric power network need to be also considered, such as, for example, harmonics, power factor, low voltage condition, high voltage condition, frequency of the alternating voltage, and/or the like.

In this regard, it should be noted that the electrolyzing plant usually has an electric converter, for instance a rectifying device, providing an electrical coupling between the electric power network and the electrolyzing device. The electrolyzing device needs to be supplied with the DC voltage, whereas, usually, the electric power network provides AC voltage, especially, a three phase AC voltage as the alternating voltage. Therefore, the electrolyzing plant has at least one electric converter, which receives the AC voltage and, in response, provides the respective DC voltage. Moreover, the electrolyzing plant may include one or more transformers, in order to transform the AC voltage before subjecting the converter. The at least one converter is usually operated in a rectifying modus. For the purpose of rectifying as such, the electric converter may have thyristors or diodes, respectively. If thyristors are provided, they can be controlled in order to adjust a specific electric power to be supplied to the electrolyzing device. Some converters may also comprise transistors such as insulated gate bipolar transistors (IGBT) or the like.

It should be further considered that the number of installed electrolyzing plants and existing electric power networks continuously increases. With regard to the global warming range, it is preferred to accelerate the production of green hydrogen. Simultaneously, share power electronic based units such as, for instance, renewable energy systems also increase leading to a decrease regarding stability of the electric power network. Consequently, an electric power network provider considers defining requirements for connection of large electrolyzing plants in existing electric power networks, in order to ensure a stable grid operation. Some of such requirements that are defined relate to fault-right-through (FRT) requirements, which define operation areas, under which conditions an electrolyzing plant needs to stay connected at a respective electric power network, and operation areas, under which conditions an electrolyzing plant is allowed disconnecting from the electric power network. Additionally, initial specifications and requirements such as the power factor are defined as well. At least some of the new requirements for load systems further consider requirements for existing photovoltaic farms and wind farms. Additionally, requirements regarding other grid operations are defined. In this regard, frequency stabilizing operations such as a so-called limited frequency sensitive mode (LFSM) are provided requiring adjustment of active power consumption and/or reactive power. Another grid stabilizing function is power oscillation damping (POD-P, POD-Q), wherein the active power intake and/or reactive power intake of the electrolyzing plant needs to be adjusted to counter-act against low-frequency active and/or reactive power oscillations in the grid.

Usually, the electrolyzing device requires a high DC current, for instance, in a range of about 7 kA through about 10 kA. The situation may become even more serious when considering a trend that most of the countries of the world are replacing existing conventional power plants by renewable energy sources, which further decreases a strength and stability of the electric power network.

In case of system perturbations of the electric power network, such as, for instance, a voltage drop, a brownout, an overvoltage condition, frequency stability, and/or the like, supporting capabilities for stabilizing the electric power network by photovoltaic farms, wind farms and/or the like may not be sufficient to ensure a stable operation of the electric power network. In this regard, it is considered to provide the new requirements for electrolyzing plants, which may make compulsory not only reactive power support requirements, but also injections of reactive current into the electric power network as well.

Moreover, large flexible loads connected to the electric power network, or grid, respectively, in particular electrolyzing plants, may cause a substantial effect on the security and/or stability of the operation of the electric power network, especially, in case that an operation of the electrolyzing plant be not flexible with requirements regarding the operation of the power supply network. For example, during electric power network faults caused by different reasons, the alternating voltage and/or its frequency may differ from a rated value. However, the electrolyzing plant shall stay connected and permanent disconnection shall be avoided.

For this reason, flexible load electrolyzing plants such as large-scale electrolyzing plants shall stay connected during a voltage or frequency fault and continue their operation after the fault is cleared. For this purpose, the electrolyzing plant needs to be able to ride through faults and, may, for instance, provide specific services that can enhance the grid stability.

This shows that providing electric power network services such as FRT and reactive current injection during fault could allow enabling more installation of large-scale electrolyzing plants resulting in more installed capacities and harmonization with the grid operation. Insofar, the installed capacities of electrolyzing plants are modest and not exceeding several MW in size, but with the present desire with regard to decarbonization policies in different sectors, large-scale electrolyzing plants are more and more expected to be added to the power supply network.

In the cases detailed before, only the ride through the fault may be achieved. However, if a provider of the electric power network requires disconnection of the electrolyzing plant, restarting of the electrolyzing plant is expensive and may cause complex actions. In this regard, important requirements of the electrolyzing plant, especially, with regard to operation of the electrolyzing plant will not be sufficiently considered.

In this regard, it is an object of the invention to improve a method, an apparatus, as well as an electrolyzing plant, in order to further support stable operation of the electric power network, and, at the same time, to enhance stable and reliable operation of the electrolyzing plant.

As a solution, a method, an apparatus, and an electrolyzing plant according to the independent claims are proposed.

Further exemplary embodiments can be derived from the features of the dependent claims.

With regard to a generic method, it is especially proposed that the electrolyzing plant receives a disconnection signal from a control center of the electric power network, wherein the disconnection signal is submitted directly to the at least one electric converter in order to cause the at least one electric converter reducing the converted power of the at least one electric converter independent from the control signal.

With regard to a generic control apparatus, it is especially proposed that the apparatus is at least configured to receive a disconnection signal from a control center of the electric power network, and to submit directly the disconnection signal to the at least one electric converter, in order to cause the at least one electric converter reducing a converted power of the at least one electric converter independent from the control signal.

With regard to a generic electrolyzing plant, it is especially proposed that the electrolyzing plant has a control apparatus according to the invention.

With regard to a computer program product, it is especially proposed that the computer program product comprises instructions to cause a computing apparatus of a control apparatus according to the invention at least to receive a disconnection signal from a control center of the electric power network or a control station of an electrolyzing plant, and to submit directly the disconnection signal to at least one electric converter, in order to cause the at least one electric converter reducing a converted power of the at least one electric converter independent from a control signal for the at least one electric converter of the control station.

With regard to a computer-readable medium, it is especially proposed that the computer-readable medium comprises a computer program product according to the invention.

Among others, the invention is based on the consideration that, especially, in case of a critical situation or event of the electric power network, the provider of the electric power network may require an electric disconnection of the electrolyzing plant from the electric power network. Usually, disconnection is established by switching a circuit breaker from an on-status to an off-status. Such disconnection causes several disadvantages with regard to the electrolyzing plant. One disadvantage may appear, for example, when disconnecting the electrolyzing plant from the electric power network causes also disconnecting a transformer, which is connected with the circuit breaker. Usually, reconnection of a transformer, especially a high power transformer, may cause a complex restart procedure as connecting with the electric power network may cause a very high inrush current. Further disadvantages may appear with regard to the operation of the electrolyzing cells, especially conveying of electrolyzing products, such as, for example, hydrogen, oxygen, and/or the like. Further deficiencies may appear if the electrolyzing cells need to be flushed with nitrogen, pressurized air and/or the like in order to avoid a very disadvantageous fuel cell operation of the electrolyzing cells and/or the like. In this regard, it should also be considered that it may be necessary that the consumed power of the electrolyzing plant needs to be shed very quickly, that is, for example, in a range of about 30 ms up to about 100 ms. In this regard, it shall be also noted that it may be necessary to provide reconnection of the electrolyzing plant in a time range of about some second through about some minutes.

The invention considers the finding that at least some of the before-mentioned disadvantages can be avoided or reduced when the disconnection signal of the provider of the electric power network does not cause switching the circuit breaker in the off-status but, however, causes the electrolyzing devices to consume less power or no power, respectively, which can be achieved by controlling the at least one electric converter correspondingly. For this purpose, the disconnection signal, which is provided from the control center of the electric power network shall be submitted directly to the at least one electric converter. A control apparatus of the electric converter may receive the disconnection signal without substantial delay and may react substantially directly in order to reduce or cut the power conversion. In this regard, reducing of the converted power may be achieved independently from the control signal of the control station of the electrolyzing plant. The inventive concept consequently allows achieving a fast reaction such as switching the circuit breaker in the off-status. Also, a complete disconnection of the electrolyzing plant and the disadvantages connected herewith can be avoided or reduced.

The invention is not limited to be applied to public electric power networks but may also be applied to local electric power networks, especially, island electric power networks. In this regard, the electric power network may be an electric power network, which may be arranged locally, especially, which may be arranged on a vehicle such as, for example, a vessel, an airplane, a train and/or the like.

The disconnection signal may be received directly from the electric power network, especially from the control center of the electric power network. For this purpose, there may be provided a specific communication line between the control center and the at least one electric converter. However, it may also be provided that the control station of the electric power network receives the disconnection signal and forwards the disconnection signal immediately to the at least one electric converter. The communication line may be an electrical line or replaced or added by an optical line. Moreover, the communication line may also be established via radio transmission. Also, a combination of the before-mentioned lines may be provided.

The electrolyzing plant may comprise two or more electric converters. The electric converters may, at least partially, be connected in parallel. If more than only one electric converter is provided in the electrolyzing plant, each of the electric converters may receive the disconnection signal directly. However, specific designs of the electrolyzing plant and/or the electrolyzing device may require that at least one electric converter may not react upon the disconnection signal. This event may appear if this specific electric converter may be connected with another electric power source than the electric power network. The electric power source may be an electric storage, a photovoltaic farm, a windfarm and/or the like.

The inventive concept allows a power reduction, especially a substantial power reduction, caused by the at least one electric converter, wherein the electric converter allows reestablishing or resuming power conversion automatically when the disconnection is required only for some seconds. With regard to the electrolyzing process, an almost continuous operation can be maintained although a respective interruption of power supply has appeared. If the disconnection is required longer than several seconds only, the control station of the electrolyzing plant can control resuming or reestablishing the electrolyzing process.

According to an exemplary embodiment, the control station receives the disconnection signal, wherein the control station remains the status signal unchanged in order to maintain the circuit breaker in its prevailing status. The prevailing status may be preferably the on-status. However, if more than only one circuit breaker is provided, the situation may appear that one of the circuit breakers may already have the off-status. In this regard, the prospective status signal for this circuit breaker may also be unchanged and maintained in the off-status. In this regard, it is unnecessary to operate the circuit breaker of the electrolyzing plant. This enhances the advantage of the inventive concept, especially with regard to resuming or reestablishing operation when the event, which causes the disconnection signal, is over.

According to another exemplary embodiment, is proposed that, in response to receiving the disconnection signal, the at least one electric converter turns off supplying energy to the at least one electrolyzing device. In this regard, the power supply of the electric converter may be reduced to about zero. However, this power reduction may cause specific support devices for the electrolyzing device to be activated, for example, for flushing the electrolyzing cells and/or the like.

According to yet another exemplary embodiment, it is proposed that the at least one electric converter sends a condition signal indicating a present condition of operation of the converter to the control station. In this regard, the control station gets information about the operating status of the electric converter. This is advantageous, especially with regard to the fact that the electric converter receives the disconnection signal directly from the control center. As the disconnection signal may overwrite the control signal of the control station, the control station may be informed about overriding the control signal. Moreover, specific characteristics and measurements, for example a converted power, a temperature, a cooling power, and/or the like may be submitted to the control station. The control station may process this data in order to consider this data for further processing, especially with regard to resuming or reestablishing operation.

The condition signal may also be sent to other electric converters, if more than only one electric converter is provided in the electrolyzing plant. The other electric converters may receive this condition signal and may adapt their operation, especially with regard to power conversion, respectively. This is advantageous, especially with regard to electric converter operating in parallel.

According to another exemplary embodiment, it is proposed that a control center of the electric power network provides the steps of detecting a predetermined network condition of the electric power network, comparing the network condition with a predetermined reference value, and dependent on comparing, providing the disconnection signal. In this regard, the control center may provide the disconnection signal dependent on the specific network condition. The network condition may relate to a voltage, a frequency, combinations thereof and/or the like. Usually, the condition may be defined by a rated value accompanied by a tolerance band, such as, for example, for the alternating voltage, the frequency, a power factor and/or the like.

According to yet another exemplary embodiment, it is proposed that the control station of the electrolyzing plant provides the steps of detecting the predetermined network condition of the electric power network, comparing the network condition with the predetermined reference value, dependent on comparing, providing the disconnection signal, and submitting the disconnection signal directly to the at least one electric converter. In this regard, the disconnection signal may also be provided by the electrolyzing plant itself. This may be provided additionally or in the alternative with regard to the power control center of the electric power network.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not detailed specifically, it may be provided that a failure signal and/or a request for inputting a user confirmation can be output and/or a standard configuration and/or a predefined initial status can be suspended.

Advantages and effects of the inventive method also apply to the inventive control apparatus and the inventive electrolyzing plant, the inventive computer program product, the inventive computer-readable medium, and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:

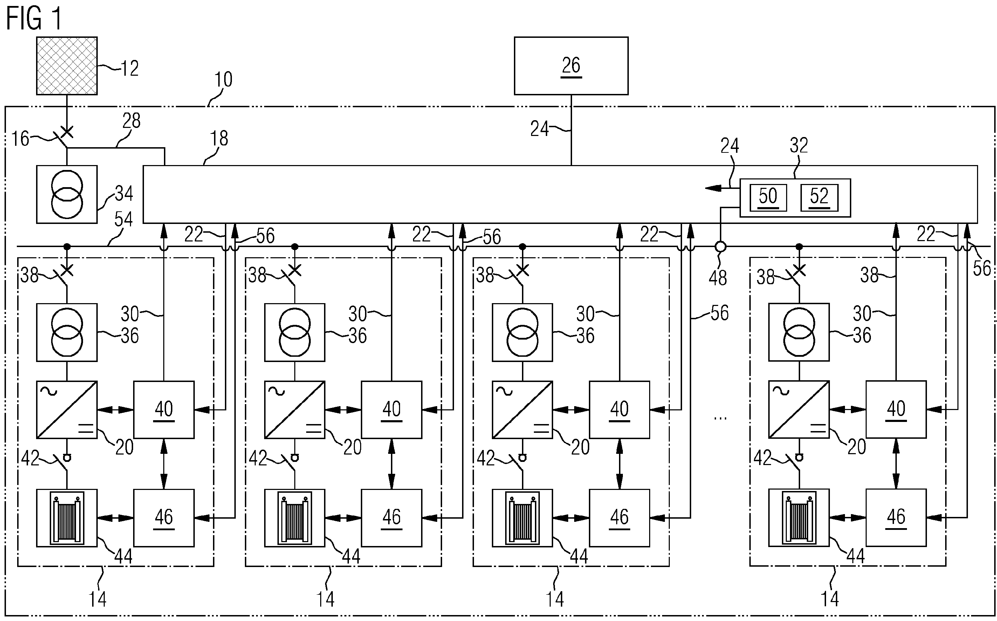

FIG 1 a schematic block diagram of an electrolyzing plant.

FIG 1 shows a schematic block diagram of an electrolyzing plant 10. The electrolyzing plant 10 has plural electrolyzing devices 14, which are in the present embodiment configured to electrolyze water by providing an electrolyzing process. In alternative embodiments, other electrolyzing processes may be provided such as, for instance, electrolyzing of carbon dioxide.

The electrolyzing plant 10 further comprises a main circuit breaker 16, which is connected with an electric power network 12 that provides an alternative voltage. The electric power network 12 is, in the present embodiment, a public power network. However, it should be noted that the invention is not limited to be used with a public power network or grid, respectively, but can be also used in connection with a local electric power network, such as an island electric power network or the like. In the present embodiment, the electric power network 12 provides a three phase alternating voltage. The three phase alternating voltage is a high voltage having an rms value of about 25 kV. The rms value may be higher, for example, up to about 100 kV or the like.

The electrolyzing plant 10 further comprises a main transformer 34 having a primary and a secondary winding. The primary winding is connected with the main circuit breaker 16. The main transformer 34 is configured to transform the three phase alternating voltage. The secondary winding of the main transformer 34 is connected with an AC bus 54, which is configured to be subjected to a three phase alternating voltage of the secondary winding. Insofar, the main transformer 34 is configured to transform the three phase alternating voltage of the electric power network 12 to a lower voltage, which may have, for example, a rms value of about 5 kV or the like.

The electrolyzing plant 10 further comprises a control station 18, which provides a status signal 28 to the main circuit breaker 16 in order to control a switching status of the main circuit breaker 16 dependent on the status signal 28.

The electrolyzing plant 10 further comprises plural electrolyzing devices 14, which have, in the present embodiment, substantially the same design. In the following, only one of the electrolyzing devices 14 is explained in further detail. This explanation can be applied to the further electrolyzing devices 14, respectively.

The electrolyzing device 14 has a device circuit breaker 38, which is connected with the AC bus 54. Moreover, the electrolyzing device 14 comprises a device transformer 36, which is configured to transform the three phase alternating voltage of the AC bus 54 to a lower three phase AC voltage. A primary winding of the device transformer 36 is connected with the device circuit breaker 38. A secondary winding of the device transformer 36 is connected with an electric converter 20, namely an AC side of the electric transformer 20. The electric converter 20 has the AC side, which is configured to be subjected to the three phase alternating voltage of the secondary winding the device transformer 36.

The electric converter 20 has a DC side, which is connected with a DC switch 42. The electric converter 20 is configured to rectify the alternating voltage of the device transformer 36 in order to provide a DC electrolyzing voltage at its DC side.

The electrolyzing device 14 further comprises a cell stack 44, which comprises a plurality of electrolyzing cells (not shown) which are electrically connected in series in this embodiment. In alternative embodiments, the electrolyzing cells may at least be partially connected in parallel. The cell stack 44 is connected with the DC switch 42 in order to be subjected to the DC electrolyzing voltage dependent on the switching status of the DC switch 42.

The electrolyzing device 14 further comprises a converter control 40, which is connected with the electric converter 20 in order to control its operation. The converter control 40 is connected with the control station 18 and receives a control signal 22 from the control station 18. The control signal 22 serves at least to control the converted power of the electric converter 20.

The electrolyzing device 14 further has a periphery control apparatus 46, which is in communication with the cell stack 44. The periphery control apparatus 46 serves especially for controlling supplying the cell stack 44 with water and discharging of hydrogen and oxygen. The periphery control apparatus 46 may also be configured to support start up or shut down of the cell stack 44, for instance, by flushing the electrolyzing cells with hydrogen during shutdown and/or the like. The periphery control apparatus 46 is in communication with the control station 18 and may exchange periphery control signals 46.

The converter control 40 is configured to provide a condition signal 30 to the control station 18 indicating a condition of operation of the electric converter 20 to the control station 18. The condition signal 30 may include data related to a presently converted power, a temperature of the electric converter 20 and/or the like.

The electrolyzing plant 10, especially the control station 18, is in communication with a control center 26 of the electric power network 12. The control center 26 is, in the present embodiment, configured to detect a predetermined network condition of the electric power network 12, which is a present frequency of the alternating voltage. In other embodiments, a rms value of the alternating voltage, an electric alternating current and/or the like may be used as the predetermined network condition, too. The control center 26 compares a present value of the predetermined network condition with a predetermined reference value. Dependent on comparing, the control center 26 provides a disconnection signal 24, which is transmitted to the electrolyzing plant 10, especially to the control station 18.

In the present embodiment, comparing includes to compare a present frequency of the alternating voltage with a predetermined frequency, which may be, for example, about 50 Hz. In some embodiments, the predetermined reference value may comprise a tolerance band. In the present embodiment, the tolerance band comprises a medium value of 50 Hz and a lower limiting value of 49,8 Hz and an upper limiting value of 50,2 Hz. If the present frequency exceeds 50,2 Hz or falls below 49,8 Hz, the disconnection signal 24 is triggered.

In one embodiment, the disconnection signal 24 may be received by the electrolyzing plant 10 and directly submitted to the converter control 40. In the converter control 40, the disconnection signal 24 overwrites the control signal 22 and causes to control the electric converter 20 to turn off, that is to reduce the converted power to zero.

In another embodiment, the disconnection signal 24 is received by the control station 18 which submits the disconnection signal 24 immediately to the converter control 40 independent from the present control signal 22, resulting in the same effect. In one embodiment, the control station 18 may override the control signal 22 and submit the disconnection signal 24 as the control signal 22. In this regard, the control station 18 overwrites the present control signal 22 by the disconnection signal 24.

In both cases, it can be achieved that the main circuit breaker 16 as well as the other circuit breakers, especially the device circuit breakers 38 and the DC switches 42, may remain in their on-statuses. Especially, the main transformer 34 as well as the device transformers 36 need not be disconnected from power supply. This allows easily resuming operation of the electrolyzing devices 14 without a necessity of a complex restart process. At the same time, a fast reaction of the electrolyzing plant 10 with regard to turn off power consumption can be achieved.

In an alternative embodiment, it may be provided that the control station 18 is configured to provide the disconnection signal 24 itself. For this purpose, the control station 18 comprises control apparatus 32, which provides the disconnection signal 24. Also, the control apparatus 32 is connected with a voltage sensor 48 which is connected with the AC bus 54 in order to measure the alternating voltage as well as its frequency.

The control apparatus 32 further comprises a storage 50, which provides a reference value with regard to the frequency. Moreover, the control apparatus 32 comprises comparing apparatus 52. Therefore, the control apparatus 32 can detect the frequency of the alternating voltage as a predetermined network condition and compares the present frequency with the predetermined reference value of the storage 50. Dependent on comparing, the control apparatus 32 provides the disconnection signal 24 and submits the disconnection signal 24 directly to the electric converters 20 or the respective converter controls 40, in order to reduce the converted power to zero.

This embodiment can be combined with previous embodiments so that the disconnection signal 24 can be provided by the control center 26 or the control station 18.

Although the present embodiments are configured to reduce the converted power to zero, it is also possible that the disconnection signal 24 contains data related to an amount of power to be reduced. In this regard, the electrolyzing devices 14 can be controlled to reduce their power correspondingly, especially by respective control of the electric converters 20. Also, in some embodiments, it may be provided that not all of the electrolyzing devices 14 reduce their power upon the disconnection signal 24. The number of the electrolyzing devices 14, which shall reduce their converted power, can be predetermined by the control station 18 or the control center 26, respectively.

Also, other combinations of the before-mentioned embodiments can be provided.

The before-mentioned embodiments shall not limit the scope of the claims. They shall be only regarded as explanation of the invention in more detail.

## Claims

1. A method for controlling an electrolyzing plant (10) having at least one electrolyzing device (14), especially configured to electrolyze water by providing an electrolyzing process, wherein the at least one electrolyzing device (14) is configured to perform the electrolyzing process in response to being subjected to an DC electrolyzing voltage, wherein the electrolyzing plant (10) is supplied with electric energy from an electric power network (12) via a circuit breaker (16) of the electrolyzing plant (10) depending on a switching status of the circuit breaker (16), wherein the switching status is controlled by a status signal (28) of a control station (18) of the electrolyzing plant (10), wherein the electric power network (12) provides an alternating voltage, wherein the electrolyzing plant (10) has at least one electric converter (20) connected with the at least one electrolyzing device (14) and the circuit breaker (16), wherein the converter (20) converts the alternating voltage into the DC electrolyzing voltage and adjusts a converted power dependent on a control signal (22) of the control station (18),
**characterized in that**
the electrolyzing plant (10) receives a disconnection signal (24) from a control center (26) of the electric power network (12), wherein the disconnection signal (24) is submitted directly to the at least one electric converter (20) in order to cause the at least one electric converter (20) reducing the converted power of the at least one electric converter (20) independent from the control signal (22).

2. The method of claim 1, **characterized in that** the control station (18) receives the disconnection signal (24), wherein the control station (18) remains the status signal (28) unchanged in order to maintain the circuit breaker (16) in its prevailing status.

3. The method of any one of the preceding claims, **characterized in that**, in response to receiving the disconnection signal (24), the at least one electric converter (20) turns off supplying energy to the at least one electrolyzing device (14).

4. The method of any one of the preceding claims, **characterized in that** the at least one electric converter (20) sends a condition signal (30) indicating a present condition of operation of the converter (20) to the control station (18).

5. The method of any one of the preceding claims, **characterized in that** a control center (26) of the electric power network (12) provides the steps of:
- detecting a predetermined network condition of the electric power network (12),
- comparing the network condition with a predetermined reference value, and
- dependent on comparing, providing the disconnection signal (24).

6. The method of any one of the preceding claims, **characterized in that** the control station (18) of the electrolyzing plant (10) provides the steps of:
- detecting the predetermined network condition of the electric power network (12),
- comparing the network condition with the predetermined reference value,
- dependent on comparing, providing the disconnection signal (24), and
- submitting the disconnection signal (24) directly to the at least one electric converter (20).

7. A control apparatus (32) for a control station (18) of an electrolyzing plant (10) having at least one electrolyzing device (14), especially configured to electrolyze water by providing an electrolyzing process, wherein the at least one electrolyzing device (14) is configured to perform the electrolyzing process in response to being subjected to an DC electrolyzing voltage, wherein the electrolyzing plant (10) is configured to be supplied with electric energy from an electric power network (12) via a circuit breaker (16) of the electrolyzing plant (10) depending on a switching status of the circuit breaker (16), wherein the switching status is controlled by a status signal (28) of a control station (18) of the electrolyzing plant (10), wherein the electric power network (12) provides an alternating voltage, wherein the electrolyzing plant (10) has at least one electric converter (20) connected with the at least one electrolyzing device (14) and the circuit breaker (16), wherein the at least one converter (20) is configured to convert the alternating voltage into the DC electrolyzing voltage and to adjust a converted power dependent on a control signal (22) of the control station (18),
**characterized in that**
the control apparatus (32) is at least configured to receive a disconnection signal (24) from a control center (26) of the electric power network (12), and to submit directly the disconnection signal (24) to the at least one electric converter (20), in order to cause the at least one electric converter (20) reducing a converted power of the at least one electric converter (20) independent from the control signal (22).

8. An electrolyzing plant (10) having:
- at least one electrolyzing device (14), especially configured to electrolyze water by providing an electrolyzing process, wherein the at least one electrolyzing device (14) is configured to perform the electrolyzing process in response to being subjected to an DC electrolyzing voltage,
- a circuit breaker (16) configured to be connected with an electric power network (12) providing an alternating voltage,
- at least one electric converter (20) that is connected with the circuit breaker (16) and the at least one electrolyzing device (14), wherein the at least one electric converter (20) is configured to convert the alternating voltage of the electric power network (12) into the DC electrolyzing voltage, in order to supply the at least one electrolyzing device (14) with electric power of the electric power network (12), wherein the at least one electric converter (20) is configured to adjust a converted power dependent on a control signal (22), and
- a control station (18) having a control apparatus (32), wherein the control station (18) is at least configured to provide the control signal (22) for the at least one electric converter (20),
**characterized in that**
the control apparatus (32) is configured to according to claim 7.

9. A computer program product comprising instructions to cause a computing apparatus of a control apparatus (32) according to claim 7 at least to
- receive a disconnection signal (24) from a control center (26) of the electric power network (12) or a control station (18) of an electrolyzing plant (10), and
- submit directly the disconnection signal (24) to at least one electric converter (20), in order to cause the at least one electric converter (20) reducing a converted power of the at least one electric converter (20) independent from a control signal (22) of the control station (18) for the at least one electric converter (20).

10. A computer-readable medium having stored thereon the computer program product of claim 9.
